# DEMANDE DE BREVET EUROPEEN

(11) **EP 3 043 264 A1**
(43) Date de publication de la demande: **13.07.2016**
(21) Numéro de dépôt: 16150492.3
(22) Date de dépôt: 07.01.2016
(51) Int. Cl.: G06F 11/14, G06F 11/20, G05D 1/00, G06F 11/07

(54) **SYSTÈME DE COMMANDE DE VÉHICULE, NOTAMMENT AÉRIEN**

(30) Priorité: 07.01.2015 FR 1550121
(71) Demandeur: Centre National d'Etudes Spatiales, 75039 Paris Cedex 01 (FR); Avionics Control Systems B.V., 2223 LA Katwijk (NL)
(72) Inventeur: GARCIA ACERO, Mauro, 31400 TOULOUSE (FR)
(74) Mandataire: Office Freylinger

(57) **Abrégé**

Un système de commande embarqué d'un véhicule comprend une unité de commande (12) comprenant un calculateur et configurée pour recevoir des informations d'une pluralité de modules périphériques (18ᵢ) et conduire une mission sur bases de ces informations. Au moins un des modules périphériques (18₁) est configuré pour, au moyen d'au moins un capteur dédié, réaliser une fonction principale et, sur demande, réaliser une fonction secondaire prédéterminée correspondant à la fonction principale d'un autre module périphérique (18₂). Un processus gardien a pour fonction : de vérifier l'état de fonctionnement de chacun des modules périphériques et, en cas de défaillance d'un module périphérique, évaluer la possibilité de réaliser la mission dans un mode dégradé, en particulier en activant une fonction secondaire dans un module périphérique non-défectueux et non-redondant du module périphérique défectueux, pour être utilisée par le module de commande en substitution des données de fonction principale du module périphérique défectueux.

## Description

### Introduction

La présente invention concerne le domaine des systèmes de commande embarqués de véhicules, notamment pour des aéronefs et plus particulièrement pour des drones.

### Etat de la technique

Comme on le sait, les drones sont aujourd'hui très prisés et utilisés dans nombres d'applications du domaine militaire à celui des jeux pour enfants, en passant par les services tels que photographies aérienne, inspection d'ouvrages, topographie, etc. Dans nombre de ces applications, les drones sont de taille modeste, voir réduite, avec peu de place pour l'électronique embarquée. Dans un souci de compacité, afin de minimiser l'espace requis pour l'électronique du système de vol et de navigation, on a conventionnellement développé des systèmes intégrés, et fermés, afin de réduire la taille, le poids, le câblage et les connections.

Dans ce même esprit, les systèmes de vol conventionnels pour drones sont conçus pour être simples et généralement sans redondance.

Ainsi, nombre des systèmes de commande embarqués de drones sont peu sophistiqués, sans redondance, et peu aptes, voir inaptes, à gérer ou assimiler des défaillances des fonctions de commande de l'appareil durant une mission.

Le US 2012/0210160 décrit, pour un véhicule automobile, un procédé pour allouer dynamiquement des tâches et signaux dans une architecture statique intégrée. Une architecture de redondance spécifie le niveau de redondance nécessaire de capteurs, actuateurs, d'ordinateurs et d'applications. En cas de défaillance d'un module périphérique, suite à une évaluation de l'état de condition des modules, un gestionnaire de reconfiguration de signal/événement réalloue la tâche du module en défaillance à un module redondant en stand-by. Ce procédé fait appel à un principe de redondance classique des composants électroniques et logiciels.

### Objet de l'invention

L'objet de la présente invention est de proposer un système de commande amélioré pour véhicules, en particulier pour des aéronefs et drones.

### Description générale de l'invention

L'invention s'intéresse particulièrement à l'architecture d'un système de commande embarqué et fournit notamment un système dont l'architecture est modulaire et sécurisée.

La présente invention concerne un système de commande embarqué d'un véhicule comprenant :
une unité de commande comprenant un calculateur ;
une pluralité de modules périphériques réalisant chacun une fonction principale déterminée, chaque module périphérique comprenant au moins un capteur dédié fournissant les mesures permettant de remplir sa fonction principale ;
l'unité de commande étant configurée pour recevoir des données des modules périphériques et conduire une mission sur bases de ces données.

Selon l'invention, au moins un des modules périphériques est configuré pour, au moyen de son capteur, réaliser sa fonction principale et, sur demande, réaliser une fonction secondaire prédéterminée correspondant à la fonction principale d'un autre module périphérique du système, ces deux modules périphériques n'étant pas redondants au sens conventionnel.

En outre, l'unité de commande est configurée pour mettre en oeuvre un processus gardien ayant pour fonction : de vérifier l'état de fonctionnement de chacun des modules périphériques et, en cas de défaillance d'un module périphérique, évaluer la possibilité, et le cas échéant décider, de réaliser la mission dans un mode dégradé, en activant une fonction secondaire dans un module périphérique non-défectueux et non redondant du module défectueux, pour être utilisée par l'unité de commande en substitution des données de fonction principale du module périphérique défectueux.

Le système de commande embarqué selon l'invention présente donc une architecture innovante qui exploite un processus gardien configuré pour réagir avec le reste de l'architecture.

Un aspect particulièrement intéressant aussi est l'emploi de certains modules périphériques qui sont conçus pour déterminer des informations correspondant à une fonction principale, et réaliser une fonction secondaire prédéterminée correspondant à la fonction principale d'un autre module périphérique du système. En cas de défaillance d'un module périphérique, le processus gardien va donc pouvoir faire appel à un module périphérique non-défaillant, programmé pour exécuter une fonction secondaire correspondant à la fonction primaire. Le terme "correspondant" se comprend ici comme capable de fournir des données sur un même paramètre, par exemple la vitesse, la position, l'altitude... On notera aussi que dans le système, le module périphérique non-défaillant apte à fournir la fonction secondaire correspondant à la fonction principale du module défaillant, n'est pas un module redondant du module défaillant. Le module périphérique non défaillant fournissant la fonction secondaire est donc un module différent, ayant un capteur propre visant à la mesure d'un paramètre, au titre de sa fonction principale, qui est différent du paramètre fourni par la fonction principale du module défaillant auquel il vient suppléer. La fonction secondaire résulte ainsi de l'exploitation des signaux de mesure délivrés par le capteur du module périphérique requis pour la fonction principale, mais dont on peut déduire d'autres informations, généralement par calcul, estimations et/ou approximations, typiquement avec une précision inférieure.

A titre d'exemple, supposons que le présent système est intégré dans un système d'avionique, qui comprendra alors typiquement une pluralité de modules périphériques tels que ; GPS, altimètre, IMU, HRS, etc. Le module GPS a pour fonction principale la détermination de position, et délivre donc au titre de cette fonction principale la position de l'aéronef. L'altimètre a pour fonction principale la détermination d'altitude.

Pour fonctionner dans le cadre de la présente invention, le module GPS est de préférence configuré pour être capable de déterminer également l'altitude de l'aéronef. Le processus gardien, qui connaît les fonctions principales et secondaires des différents modules, pourra donc, en cas de défaillance du module altimètre, activer la fonction secondaire du module GPS pour utiliser l'information d'altitude au lieu de celle du module altimètre défaillant.

Dans les systèmes d'avionique conventionnels, le principe de redondance est généralement employé sur les modules critiques; c'est-à-dire qu'on prévoit deux ou trois modules périphériques réalisant la même fonction (qui peuvent être de conception identique ou similaire). Si un capteur, respectivement un module périphérique, devient défaillant, il reste un ou deux autres modules périphériques dédiés à la même fonction. Dans les drones en revanche, la redondance n'est souvent pas possible pour des raisons de place, coût, poids et de consommation d'énergie.

Le système selon l'invention se révèle donc particulièrement avantageux car la fonction secondaire d'un module périphérique va permettre de continuer la mission en délivrant une information correspondant à la fonction principale d'un autre module périphérique défectueux, bien que ces deux modules ne soient pas redondants (c'est-à-dire ils ont des fonctions principales différentes pour mesurer des paramètres différents). Toutefois, comme la précision de cette fonction secondaire sera généralement inférieure à celle du module défectueux, (par exemple, la mesure d'altitude à l'aide du GPS est moins précise qu'avec l'altimètre), le système est alors dit en « mode dégradé ».

La conduite de la mission en mode dégradé impliquera en général l'ajustement de certains paramètres du système, afin de tenir compte de la précision réduite lors de l'utilisation des données de fonction secondaire.

De préférence, lorsqu'aucun module périphérique non-défectueux ayant une fonction secondaire apte à remplacer le module périphérique défectueux n'est trouvé, le processus gardien évalue la possibilité de continuer la mission avec la perte complète du module périphérique défectueux ; et en particulier, si la mission ne peut pas être poursuivie sans ledit module périphérique défectueux, le processus gardien déclenche une procédure d'arrêt d'urgence. En outre, si la mission peut être poursuivie sans ledit module périphérique défectueux, dans un mode de commande dégradé, alors le processus gardien invite l'utilisateur à décider de la poursuite de la mission ou de sa fin.

Dès qu'une incohérence d'un module périphérique est détectée, le processus gardien déclenche avantageusement une routine de récupération de situation d'erreur, comprenant de préférence au moins l'une des actions suivantes : redémarrage du capteur ou du module périphérique, réinitialisation de la communication avec le module périphérique, demande aux autres modules périphériques leur état de communication.

Dans le système, au mois un module périphérique est configuré pour réaliser au moins une autre fonction secondaire correspondant à la fonction primaire d'un autre module périphérique du système. Les modules périphériques se présentent généralement sous forme de carte électronique.

En pratique, un processus applicatif correspondant à chaque module périphérique est exécuté dans une partition dédiée de la mémoire du module de commande.

Pour l'application à l'avionique, le système comprenant au moins une partie des modules périphériques suivants : IMU, GPS, HRS, altimètre, Pitot, Radar Doppler, et chacun de ces modules périphériques est configuré pour opérer une fonction principale et au moins une fonction secondaire.

La présente invention se montre particulièrement avantageuse dans son application aux systèmes de commande de l'avionique. On notera notamment les aspects suivants.

**Robustesse**. La plus grande partie des petits systèmes d'autopilotes pour des utilisations civiles (notamment pour drones) sont fortement intégrés et n'ont qu'un seul processus global (interface avec les dispositifs externes, algorithmes de détermination d'attitude, systèmes de contrôle, gestion de la communication TM/TC, etc.). Ces systèmes ne sont ni robustes, ni tolérants aux pannes. La présente invention, utilisant différents processus tournant en parallèle, peut fonctionner en mode dégradé même avec la perte d'un ou plusieurs dispositifs (modules périphériques).

Le processus gardien a un rôle de supervision et de maître dans l'architecture en surveillant le bon fonctionnement du système de commande. L'action du processus gardien dans cette architecture est indispensable pour : la vérification des états d'exécution des différents processus et pouvoir relancer (et de préférence même faire du débogage en cas de problème lors de l'exécution de certains processus) ; le contrôle de l'état de la mémoire partagée (par exemple par des CRC à la fin de chaque segment) pour éviter un problème de corruption de mémoire et ainsi pouvoir réagir au plutôt en diminuant les impacts ; pour l'analyse de sémaphores pour l'accès à la mémoire avec la capacité de débloquer une situation d'instabilité, etc.

**Modularité.** La presque totalité des systèmes autopilotes connus sont basés sur des architectures fermées non modifiables ou seulement modifiables par le constructeur. Le système de commande selon l'invention présente une architecture qui permet l'intégration de nouveaux modules périphériques, ou le remplacement de modules par d'autres. Dans ce cadre de modularité, il est important de mentionner la possibilité de rajouter un espace de communication pour la charge utile pour qu'elle puisse aussi utiliser de la mémoire partagée pour les échanges entre celle-ci avec les autres processus et la station sol (dans le cas des drones).

**Modification d'un module périphérique**. La modularité de l'architecture du présent système permet de faire évoluer les fonctionnalités du système avec les avancées technologiques. Par exemple, l'arrivée du système de positionnement par satellites Galileo amènera de nouveaux modules de positionnement plus précis et plus performants que ceux basés sur le système GPS. Dans ce cadre évolutif, pour remplacer un modules GPS déjà intégré par unnouveau module de positionnement Galileo, il suffira de coder un nouveau processus d'interface pour ce module Galileo tout en gardant l'interface générique de tous les processus, et le nouveau module Galileo pourra être pris en compte dans le système.

**Capacité de Certification**. L'organisation du système en différent processus aide à la certification des logiciels car les différents processus possèdent alors leurs propres niveaux de criticité pour se dérouler dans un environnement conforme DAL utilisé dans la DO-178. Aussi, cette modularité permet de faire une analyse décomposable dans les différents sous-systèmes pour aider à la certification de chaque partie.

**Souplesse**. En opposition aux systèmes fermés, la conception du présent système en différents sous-systèmes et processus permet de changer certaines fonctionnalités par d'autres en cas de besoin particulier ou d'évolution, tout en minimisant l'impact potentiel sur l'ensemble du système. Le point commun à conserver est l'interface système au travers de la mémoire partagée, tout le reste est totalement indépendant à chaque module et processus.

**Performance**. L'architecture modulaire du présent système de commande permet de gagner en efficacité dans l'exécution car seulement les modules nécessaires sont ceux qui sont exécutés. Comparativement aux architectures d'un fil d'exécution, la présente architecture permet d'exécuter uniquement les codes nécessaires, évitant ainsi des centaines ou milliers de conditions superflues typiques dans la programmation de la cadence dans les logiciels à un seul fil d'exécution.

**Fonctionnalités.** Dans le cadre de l'avionique, l'architecture du présent système peut inclure en configuration de base certaines fonctionnalités dédiées à des systèmes autonomes dans l'aéroporté, telles que :
- processus de détermination d'attitude ;
- processus de contrôle pour la gestion du vol ;
- processus d'amélioration de la position GPS ;
- système de gestion d'atterrissage en filet.

### Description à l'aide des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
- Fig.1:: un schéma de principe du présent système de commande dans une variante constituant et intégrée à l'avionique pour drone ; et
- Fig.2:: un diagramme de la structure de fichier de configuration principal et du fichier de configuration processus.

Dans la suite, on donnera une explication plus détaillée du présent système de commande, dans une application au domaine de l'aviation, et dans laquelle les modules et fonctions décrits sont liés au pilotage d'un aéronef, en particulier d'un drone. Il est toutefois clair que le principe de fonctionnement est transposable à d'autres systèmes de commande comprenant une pluralité de modules périphériques externes fournissant des informations permettant de conduire une mission, en particulier dans le domaine automobile.

Dans le présent texte, on désigne par « drone » tout aéronef télépiloté circulant sans aucune personne à bord, et généralement apte à embarquer une charge. Pour certaines applications de proximité, le vol peut se faire en vue directe par un opérateur au sol (le télépilote), via le système de commande et de contrôle au sol. Pour des explorations hors vue, le drone évolue de préférence de manière « automatique », c'est-à-dire que son évolution en vol a été programmée par quelque moyen que ce soit avant le début du vol, et/ou est mise à jour pendant le vol, et que tout ou partie du vol s'effectue sans intervention directe de l'opérateur, sauf exception ou mode de commande de secours.

On notera aussi que le mot "redondant" est utilisé dans son sens conventionnel: deux modules sont dits redondants lorsqu'il ont la même fonction, donc ici la même fonction principale dans le système, pour fournir des données de mesure sur un même paramètre (ex. vitesse, position...) et avec sensiblement la même précision/qualité. Au niveau conception, deux modules redondants peuvent être de conception identique ou similaire (un module similaire est par exemple un module fabriqué par un autre fournisseur s'appuyant sur un capteur d'une autre technologie, mais pour la mesure du même paramètre, avec sensiblement la même précision). A l'inverse, deux modules sont dites non-redondants lorsqu'ils sont de conception différente pour des fonctions principales différentes.

### I. Présentation du système

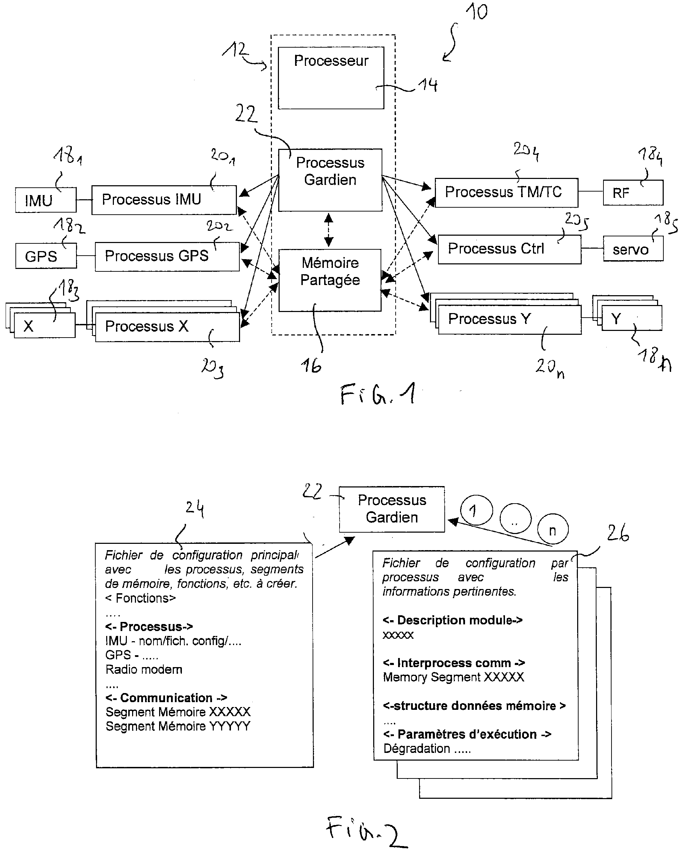

La Figure 1 est un schéma de principe du présent système de commande 10. Le signe de référence 12 indique de manière générale une unité de commande formant le coeur du système et comprenant un calculateur avec au moins un processeur 14, ainsi qu'une mémoire partagée 16. Un certain nombre de modules périphériques 18₁ à 18ₙ sont connectés à l'unité de commande 12. L'unité de commande et les modules périphériques se présentent généralement sous la forme de cartes électroniques, les modules périphériques étant connectés sur la carte de l'unité de commande. Mais des modules périphériques peuvent être reliés à distance à la carte de l'unité de commande, ou bien intégrés dans celle-ci.

L'unité de commande 12 est programmée pour conduire une mission. De manière générale, la mission peut consister à faire fonctionner le véhicule, respectivement la partie de véhicule auquel elle est associée, pendant le temps d'utilisation du véhicule. Pour effectuer la mission, l'unité de commande reçoit, traite et transmet des données en provenance de, et vers, les modules.

Dans une utilisation avionique pour drone, le système 10 comprend une pluralité de modules périphériques tels que :
Module IMU 18₁ : la centrale inertielle fournit les données d'attitude de l'aéronef
Module GPS 18₂ : fournit les informations de position
Module actionneur (servo) 18₅ : commande différents actionneurs
Module TM/TC 18₄ : radiocommunication
Et d'autres modules encore non représentés à la Fig.1 tels que :
module altimètre, module HRS (détermination de route), module Pitot (mesure de la vitesse de l'air), module Radar Doppler (détermination de vitesse sol), tachymètre, indicateurs d'énergie, etc.

En général, chaque module se présente sous la forme d'une carte électronique portant les moyens (capteurs, moyens de calcul etc.) requis pour mettre en oeuvre la ou les fonctionnalités attribuées à ce module.

Le calculateur constitue et est configuré comme un système partitionné. Il comprend donc une mémoire partagée 16, le partionnement étant avantageusement opéré spatialement et temporellement. Le principe du partitionnement est bien connu en informatique et conventionnellement appliqué dans le domaine de l'avionique ; cette technologie en tant que telle ne sera donc pas décrite davantage. Ainsi toutes les technologies de partitionnement appropriées peuvent être employées.

Chaque module périphérique est associé à un processus 20₁...20ₙ correspondant, lequel est lié à une partition propre de la mémoire partagée 16.

Tel qu'employé dans le présent texte, le terme processus désigne de manière générale et dans son sens conventionnel, un programme en cours d'exécution. Le système de commande met en oeuvre une variété de processus, qu'il peut initier et terminer. Par la suite les processus 20i associés aux modules périphériques sont appelés « processus applicatif » ou simplement « processus ». Le PG gère les processus applicatifs 20ᵢ ainsi que d'autres processus latents qui peuvent être lancés en cas de besoin.

A noter encore la présence du processus de contrôle de vol 20₅. Il s'agit de manière générale d'un processus de contrôle qui :
- reçoit en entrée les données d'état actuel de la plateforme (ex. position, orientation etc. déterminés par les modules à bord) et les données d'état souhaité (selon la mission),
- intègre le mode de vol et l'aérodynamique de l'appareil, et
- interface avec les actuateurs 18₅ pour conduire la mission.

Le processus de contrôle de vol tourne dans une partition dédiée de la mémoire 16. Le système peut comprendre plusieurs programmes de contrôle de vol, avec un seul processus de contrôle de vol en exécution. Ceci permet d'effectuer des vols même dans des cas dégradés où l'aérodynamique aura changé ou bien lorsque les actuateurs ne se comportent d'une façon nominale.

On appréciera que le système de commande selon la présente invention se distingue particulièrement par la capacité accrue d'une couche logicielle de l'unité de commande dite « processus gardien » 22 (aussi noté PG), à réagir avec le reste de l'architecture. A l'initialisation du système, le processus gardien (dont l'exécution démarre de manière prioritaire) ingère un ou plusieurs fichiers de configuration qui définissent des caractéristiques de fonctionnement pouvant être envisagées lors de l'exécution, tels que par exemple : potentiels problèmes lors de la communication avec le dispositif externe, comportement à tenir en cas de dégradation du système, etc. En outre, ce fichier de configuration ajoute une description des structures de données utilisées par les processus associés aux modules périphériques pour permettre au processus gardien de vérifier l'intégrité des données en mémoire lors de vérifications.

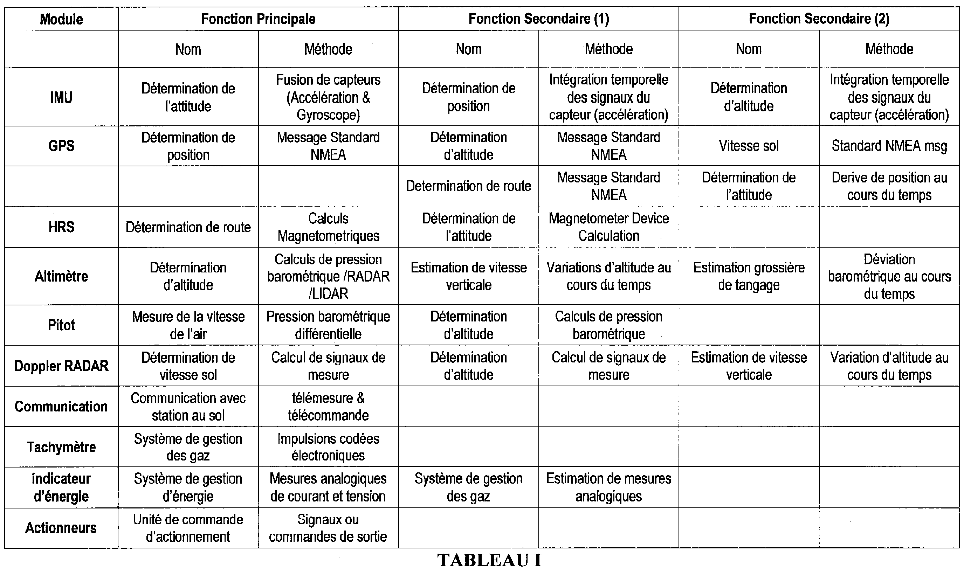

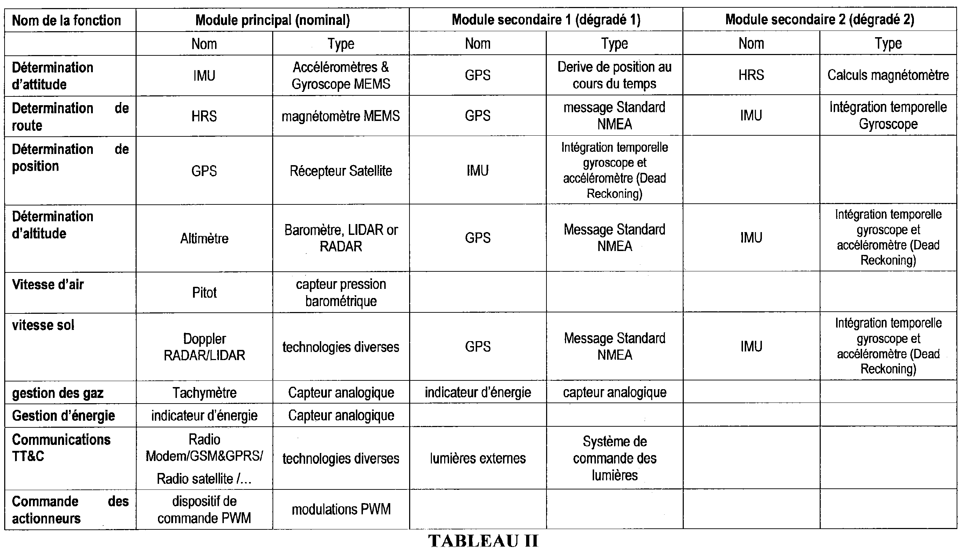

Ce fichier de configuration est tout à fait compatible avec la caractéristique d'ouverture du système car l'utilisateur final pourra créer ces fichiers de configuration de façon personnelle en respectant le formalisme adopté. La figure 2 illustre de manière générale ce principe de configuration.

Un fichier de configuration principal 24 du processus gardien inclut une définition des différentes fonctions (module périphériques et applications associées), ainsi que les segments mémoire dédiés, etc.

Le processus gardien lit également un fichier de configuration 26 pour le processus applicatif correspondant à chacun des modules périphériques 18ᵢ. Ces fichiers de configuration 26 viennent préciser les modules, structures de données, paramètres d'exécution, etc.

Le processus gardien est conçu pour pouvoir réagir en temps réel contre tout événement qui peut affecter ou dégrader le système de manière globale. Le processus gardien est avantageusement programmé pour remplir une, de préférence l'ensemble, des fonctions suivantes :
1. **Relancer un/des processus en cas de défaillance ou blocage irrécupérable.** Si un processus ne communique plus avec le processus gardien, il n'envoie plus d'informations sur son état d'exécution, et il ne répond plus aux appels du processus gardien. Il pourra être tué et relancé pour assurer le bon fonctionnement. Si malgré cela ce processus n'arrive plus à fonctionner de façon nominale, le processus gardien peut décider de fonctionner sans ce processus s'il n'est pas critique et/ou de communiquer au centre de contrôle ce problème pour analyser les possibilités d'intervention.
2. **Résolution des problèmes en état d'exécution**. Le processus gardien est programmé pour contrôler la robustesse de la mémoire et des autres systèmes de communication, de sorte à pouvoir réagir en cas de mauvais fonctionnement d'un processus.
   Par exemple (1), un processus d'un module appartenant à la charge utile est en train de corrompre la mémoire partagée attribuée à la charge utile. Le processus gardien va empêcher l'accès de ce processus à la mémoire.
   Un autre cas (2) peut être le dysfonctionnement d'un processus critique : dans ce cadre le processus gardien va déclencher la réinitialisation du processus défaillant ainsi que les interfaces de ce processus pour essayer de remettre le système en état de fonctionnement nominal.
3. **Communication interne**. Le processus gardien comprend un volet communications, afin de communiquer et échanger des informations avec les processus du système, ce qui permet d'une part d'avoir une vision globale de l'exécution du système et aussi de pouvoir réagir d'une façon locale si un problème concerne un seul processus ou de façon générale si plusieurs problèmes se cumulent sur différents processus.
   - Supposons à titre d'exemple que le processus de la centrale inertielle n'arrive plus à communiquer avec le module périphérique correspondant (c.-à-d. la centrale inertielle). Le processus en question communique ce problème au processus gardien, qui peut à son tour relancer le module, reconfigurer le port de communication, etc. pour essayer de résoudre l'erreur. Dans des architectures évoluées, il est même possible d'avoir un processus dédié à la gestion électrique de tous les modules et configuré pour éteindre et rallumer les modules.
   - Supposons maintenant qu'en même temps que le processus de la centrale inertielle communique son problème, le processus applicatif de lecture GPS aussi signale un problème de communication avec le module GPS, ainsi que le processus applicatif de lecture de la sonde Pitot, celui de l'altimètre barométrique, etc. Dans un tel cas, le processus gardien comprendra qu'il ne s'agit plus d'un problème isolé mais d'un problème général de fonctionnement et il enverra une alerte critique à l'unité de commande pour l'informer de son état.
4. **Gestion de vol.** Le processus gardien est programmé pour être capable de modifier l'exécution des différents processus par rapport aux caractéristiques du vol et/ou défaillances du système. Toutes les possibilités de vol en dégradé sont prédéterminées et donc incluses dans le fichier de configuration. Voici quelques exemples:
   - Si le module GPS tombe en panne de façon irrécupérable, le processus gardien demande au processus de navigation de changer le mode de vol et la mission à poursuivre de façon immédiate par une nouvelle mission qui volera en cercles autour du point actuel, et il restera en attente de l'autorisation d'atterrir de la part du contrôleur, une fois que l'équipe de récupération se sera rendue sur le site pour récupérer l'appareil.
   - Il a été détecté que le moteur ne fonctionne plus, soit par un capteur de tours moteur (RPM), soit par le constat que les commandes envoyées au moteur pour monter la poussée ne modifient pas le vol comme attendu. Dans ce cas là, le processus gardien peut demander au processus de contrôle de vol de passer du mode de vol standard à un mode de vol sans moteur, et ainsi faire passer l'ensemble du système en mode planeur.
   - En général, le processus gardien va pouvoir, en cas de défaillance d'un module périphérique, décider de réaliser la mission dans un mode dégradé, en activant une fonction secondaire dans un module périphérique non-défectueux et non redondant du module périphérique défectueux, pour être utilisée par l'unité de commande en substitution des données de fonction principale du module périphérique défectueux.

### Autres exemples :

### 5. Défaillance généralisée:

1) Un processus X alerte le processus gardien (PG) de la défaillance de son module périphérique associé.
2) Le PG demande au processus X de redémarrer et réinitialiser son module périphérique.
3) Sans avoir eu la notification de la bonne réinitialisation du module, un autre processus Y annonce que son module périphérique associé est en état de disfonctionnement.
4) Le PG décide de faire une demande explicite à tous les autres processus de vérifier l'état de fonctionnement de leurs modules périphériques respectifs.
5) A ce stade, les cas suivants peuvent se présenter :
   a. Tous les autres modules périphériques sont en bon état de marche, donc le PG décide, selon que les modules périphériques défaillants sont critiques ou non pour la mission, d'annoncer un état de dégradation majeur ou mineur et faire un retour à la base (si possible) ou continuer la mission.
   b. Les modules périphériques défaillants sont des dispositifs critiques, mais il existe des modules redondants en état de marche. A ce niveau, et selon de l'état de la mission, le PG peut décider de continuer la mission ou de faire un retour à la base. Cette décision peut être prise par exemple, selon le pourcentage de mission déjà accompli et ce qu'il reste à faire.
   c. D'autres modules périphériques se montrent aussi défaillants. Dans ce cas là, et avec les modules restants, le PG doit prendre la décision de revenir à la base, de faire un atterrissage d'urgence ou de se maintenir en vol en attendant l'équipe de sauvetage.
   Dans cette situation le PG, doit réagir en fonction de la criticité et fonctionnalité des modules périphériques. La centrale inertielle est un module indispensable pour la navigation ; sans elle, il est impossible de voler. Par contre, d'autres modules comme le GPS, la sonde Pitot ou l'altimètre barométrique ne sont pas indispensables.

### 6. Défaut d'un module non critique et sans redondance:

1) Voyons par exemple le cas du module altimètre barométrique. Trois possibilités peuvent apparaître:
   a. Le processus applicatif associé à l'altimètre est en train de corrompre la mémoire avec des informations erronées et, après réinitialisation, du processus, il n'y a pas d'amélioration.
   b. Le processus annonce que son module est défaillant et qu'il n'arrive pas à obtenir des informations correctes.
   c. Aucune information n'arrive plus de la part du processus de l'altimètre, sans succès de résolution de la part du PG.
2) Le PG demande au processus GPS de mettre en mémoire la valeur de l'altitude obtenue par les satellites.
3) Le PG demande au processus d'interface avec la centrale inertielle d'ajouter un estimatif de variation de hauteur et de l'ajuster avec celle produite par le GPS.
4) Le PG annonce au processus de contrôle de vol que l'altitude n'est plus aussi fiable qu'avant (diminution du dégrée de fiabilité / mode dégradé) et qu'il doit prendre une approche beaucoup plus conservatrice pour la gestion des élévateurs (management du pitch).
5) Selon l'état de la mission, le PG décide d'annuler la mission et faire retour à la base ou de la continuer.

Une situation similaire peut aussi se produire avec d'autres modules périphériques, par exemple la sonde Pitot : elle est très importante pour un vol maîtrisé, mais il est tout à fait possible de s'en passer en adoptant un pilotage très conservatif.

### 7. Défaut d'un module critique et avec de la redondance:

1) Plusieurs possibilités sont à analyser dans la situation de défaillance d'un module critique, par exemple, la centrale inertielle (dans cet exemple, il y a au départ au moins trois modules de centrale inertielle IMU).
   a. En général, ces situations amènent à un état où les informations associées à l'IMU1 ne sont pas cohérentes à celles de l'I-MU2.
   b. S'il y a plus de 2 IMUs, le PG fait une analyse des donnés de toutes les centrales inertielles et il demande au processus de l'IMU incohérente de résoudre le problème ou d'arrêter son exécution (en cas d'impossibilité de résolution).
   c. Le PG se met en état dégradé, mais il continue la mission s'il reste encore au moins deux moyens redondants.
2) Lorsqu'il n'y a pas de cohérence entre au moins deux modules IMU, la procédure pour découvrir quel est le module défaillant est plus complexe:
   a. Le PG demande au processus d'estimation de l'attitude de donner une estimation de l'attitude en se basant dans les dernières données historiques du GPS du HRS et éventuellement de l'altitude.
   b. Le PG fait une comparaison de cette estimation de tangage, lacet et roulis (pitch, yaw and roll) avec celles obtenues au travers des données des centrales inertielles.
   c. Le lacet du GPS est aussi comparé avec celui obtenu au travers de données inertielles.
   d. Si une centrale inertielle se montre clairement défaillante (niveau de digression entre les mesures données par l'IMU et les valeurs estimées) dans tous les comparatifs, le PG demande au processus de résoudre l'état de dysfonctionnement ou de s'arrêter.
   e. Si deux modules IMU restants se montrent dans un état très similaire d'incohérence (valeurs similaires de digression par rapport aux valeurs estimées), ou ne sont pas du tout similaires, le PG se met en état d'urgence et commande un atterrissage d'urgence avec les estimations données par l'IMU la moins défaillante.

### 8. Interprétation et recherche de l'erreur lorsqu'il y a un défaut d'un module critique non redondant par exemple le moteur.

1) Le PG reçoit de la part du processus de gestion du moteur, un dysfonctionnement dans le moteur ou par exemple dans le module compte-tours.
2) Si le système dispose d'autres modules en relation avec le moteur, par exemple un générateur de courant entrainé par le moteur, le PG peut demander à ces modules de retourner la valeur de l'électricité produite qui est fonction de la vitesse moteur.
3) Si les informations sont positives et le générateur couplé au moteur produit toujours de l'électricité, le PG annonce au gestionnaire du moteur le dysfonctionnement du dispositif du comptage de tours. Ensuite, le PG annonce au système de contrôle de pilotage ce dysfonctionnement et demande un pilotage plus conservateur lors de la commande moteur, car la réponse de ce dernier ne peut plus être vérifiée avec la même précision.
4) Si le module de gestion de courant du générateur entrainé par le moteur ne détecte pas d'électricité produite, le PG peut demander un dépannage de la situation avec les éléments suivants:
   a. Le PG vérifie qu'aucune manoeuvre n'est en cours (vérification des informations de l'attitude en vol), donc l'attitude est plate.
   b. Le PG vérifie dans quel état sont les surfaces de gestion de vol (élévateurs, ailerons, etc.) et il les met en état de repos.
   c. Le PG demande au processus de la centrale inertielle de vérifier les accélérations instantanées.
   d. Le PG demande au processus de contrôle de faire une accélération de moteur.
   e. Le PG analyse les résultats des modules de centrales inertielles pour vérifier si les accélérateurs montrent une accélération dans le sens du mouvement, suite à la demande d'accélération.
5) Si des accélérations ont été détectées, plusieurs modules à capteurs non critiques sont en état de panne ce qui conduit à l'état décrit d'une défaillance généralisée où les dispositifs défaillants doivent être isolés pour prendre les décisions correctes.
6) Si aucune accélération n'a été détectée, le moteur est défaillant et le PG demande au système de contrôle de se mettre en mode planeur pour un atterrissage d'urgence sans moteur.

### II. Exemple d'un système d'avionique avec ses modules

Le système de commande est destiné à constituer et configurer une partie d'un système d'avionique pour aéronef, notamment pour drone. L'architecture du présent système est de conception simple et efficace. Le processus gardien veille au bon fonctionnement du système et met en oeuvre, dans la mesure du possible, une stratégie de fourniture de données de substitution lors de la défaillance d'un module périphérique.

Dans une variante, dans le cadre de l'architecture illustrée à la Fig.1, le système comprendre outre l'unité centrale 12 les modules périphériques suivants : IMU, GPS, HRS, altimètre, Pitot, Radar Doppler, Communication, tachymètre, indicateurs d'énergie, servo-commande. A chacun de ces modules est associé un processus applicatif respectif qui est avantageusement opéré dans une partition respective de la mémoire partagée 16.

Le Tableau I récapitule, pour chaque module périphérique, la fonction principale, en désignant l'objectif de cette fonction (colonne *Nom*) et le principe de détermination (colonne *méthode*). Dans le cas de la centrale inertielle IMU, elle a pour objectif (fonction principale) de déterminer l'attitude de l'aéronef, et cette détermination est faite au moyen des capteurs dédiés (généralement accéléromètres et gyroscope 3 axes, en particulier du type MEMS).

Une partie de ces modules périphériques sont configurés pour réaliser au moins une fonction secondaire (fonction secondaire (1) et (2), qui fournit des informations de même nature qu'un autre des modules périphériques avec lesquels ils ne sont pas redondants.

Ainsi, dans le cas de l'IMU, celui-ci est configuré pour fournir une ou deux des fonctions secondaires suivantes :
1. détermination de position : les capteurs d'accélération du module IMU sont utilisés selon une approche d'intégration temporelle des capteurs pour fournir des données de position. Bien que la précision du positionnement sera inférieure à celle d'un module GPS, elle est suffisante pour voler dans un mode dit dégradé.
2. Détermination d'attitude : les capteurs d'accélération du module IMU sont utilisés en utilisant une approche d'intégration temporelle des capteurs pour fournir des données d'attitude de l'avion, classiquement pitch, roll et yaw.

Par conséquent, lorsque l'IMU est prévu en outre pour ces deux fonctions secondaires, le PG sait qu'il peut, en cas de défaillance du module GPS, utiliser en substitution des données de positionnement fournies par le module IMU, ou en cas de défaillance du module HRS, utiliser en substitution des données de route fournies par le module IMU.

Ainsi, dans le cadre d'un système d'avionique, les modules IMU, GPS, HRS, altimètre, Pitot et Radar Doppler, sont avantageusement configurés pour comprendre au moins une fonction secondaire listée au Tableau I, de sorte que cette fonction secondaire puisse être employée par le PG en cas de besoin.

Il est clair que le système est ouvert à d'autres modules, pour lesquels on pourra également définir une fonction principale et une fonction secondaire en backup d'un autre module périphérique.

Le présent exemple ne décrit pas de modules redondants (tel que deux IMU, l'une backup de l'autre). Mais il est entendu que le présent système est aussi ouvert à ce type de configuration où il y a plusieurs types de modules similaires pour assurer la même fonction principale, redondants entre eux.

Le tableau Il décrit les différentes fonctions dont le système de vol a besoin pour piloter l'aéronef. Pour chaque fonction, on définit le module principal fournissant l'information en mode de fonctionnement nominal (module principal), et le cas échéant un module secondaire (1) apte à fournir des données de substitution pour la même fonction dans un mode dégradé de niveau 1, et éventuellement un 2^{e} un module secondaire (2) apte à fournir des données de substitution pour la même fonction dans un mode dégradé de niveau 2.

### III. Description des fichiers de configuration

Afin de mettre en oeuvre la stratégie présentée ci-dessus dans laquelle des modules périphériques de natures différentes peuvent servir mutuellement de backup, on utilise des fichiers de configuration pour le PG et pour les modules, ces fichiers prévoyant les fonctions et échanges. Ces fichiers de configuration utilisent préférablement la technologie XML pour la codification des informations.

### 1. Fichier de configuration principal - dédié au PG

Le fichier de configuration principal est utilisé par le PG et liste les fonctionnalités requises pour la gestion du vol. Pour chacune des fonctions, on définit :
- le module fournissant l'information requise au titre d'une fonction principale. Il s'agit de la fonction utilisée dans le mode de fonctionnement nominal (indiqué « prime »).
- le ou les modules pouvant fournir des données de remplacement pour certaines fonctions, dans un mode de fonctionnement dégradé. On classe les modules servant de backup par ordre d'importance (indiqués Degr1, degr2, etc - le plus performant étant Degr1).
- le niveau de criticité de la fonction dans le système.
- et le segment mémoire attribué au processus applicatif
La structure du fichier de configuration est décrite ci-dessous au IV.1, et reprend les fonctionnalités conformément aux tableaux I et II.

### 2. Description du fichier de définition de l'ensemble des modules :

Outre le fichier de configuration principale, le PG utilise un fichier « modules », qui définit les différents modules périphériques et pour chacun d'eux :
- la fonction principale
- la ou les fonctions en état de dégradation, c'est-à-dire, des fonctions que l'équipement est capable de fournir mais dans une qualité et précision inférieures à celles du/des module(s) dédiés à cette/ces fonction(s).

La structure du fichier « modules » est décrite au IV.2 ci-dessous. Conformément au Tableau II, ce fichier définit que la fonction principale (mode nominal) de l'IMU est de fournir les informations d'attitude, mais délivre également, conformément aux fonctions secondaires en mode dégradé, des informations de position et d'altitude.

On appréciera en particulier que l'on peut déclarer des modes de fonctionnement en dégradé au cas où le mode principal ne peut plus s'appliquer de façon nominale. Dans l'exemple donné, dans le cas des actuateurs, il y a un mode de control nominal défini, mais deux autres modes qui peuvent être lancés en cas de disfonctionnement dans la gestion de l'information du pitch et qui vont permettre d'adapter le mode de comportement du système aux anomalies trouvées. Donc, le processus gardien aura la possibilité de lancer l'exécution de ces modes en substitution du mode nominal si les évènements arrivés le précisent.

### 3. Description des fichiers par module :

Pour chacun des modules périphériques à utiliser dans le système on crée encore un fichier module individuel.

Comme déjà indiqué, les fonctions listées dans le tableau II et requises pour la gestion du vol sont données à travers un processus applicatif qui est associé, dans le mode nominal, à un module périphérique ayant une fonction principale correspondant à ce processus applicatif. S'il y a deux modules périphériques redondants pour une même fonction, ils sont gérés par le même processus applicatif.

La structure du fichier applicatif module qui est utilisé par un processus applicatif lié à un module périphérique comprend au moins une partie des sections suivantes :
- Nom du fichier qui va s'exécuter pour l'accès aux informations (rubrique FILE).
- Nom du fichier de logs (rubrique Logfile).
- Déclaration de la redondance s'il y en a et, dans l'affirmative, quel type, quel est le programme redondant, etc (rubrique Redundancy).
- Définition des fonctions globales du sous-système (rubrique Function) en nominal et en dégradé, ainsi que les noms des routines qui exécutent les instructions et les noms des variables attendues lors de l'exécution, avec la fréquence d'exécution en hertz.
- Déclaration d'actions dans le cas de problèmes de communication (rubrique Communication Error), d'une part entre le processus et le module (nombre de fois de relance, si on peut relancer l'interface ou pas, etc.) et entre le processus gardien et ce processus spécifique, ainsi que le temps d'attente avant de lancer une alarme de non-communication, ainsi que le nombre d'alarmes acceptable avant de déclencher la procédure de récupération du processus.
- Définition du type d'interface de communication avec le module dédié.

Prenons l'exemple donné ci-dessus au I-7) d'une centrale inertielle IMU. Chaque dispositif doit avoir un processus associé qui accède à ses ressources.

En cas de redondance à chaud, deux processus peuvent être lancés sur deux équipements différents, mais seulement un avoir la main pour fournir les données de la centrale inertielle ; cette possibilité est détaillée dans le fichier exemple. Dans ce cas-là, il faut indiquer au processus gardien qui est (sont) le(s) processus redondant(s) pour lui permettre de réagir en cas d'anomalie.

Si la redondance se fait à froid, il faut indiquer aussi dans l'autre fichier du processus redondant qu'il ne faut pas initier l'exécution pour ne pas consommer de temps machine sans avoir besoin. Ce cas peut se présenter dans la gestion de télémesure et télécommande, car le démarrage de la tâche est assez rapide pour donner une sensation de transparence dans la gestion de redondance.

On peut avoir le cas d'un processus qui accède à deux modules. On spécifiera dans ce cas quelles sont les interfaces d'accès et le comportement attendu pour chaque dispositif.

Chaque fichier descriptif de chaque processus contient les éléments suivants:
- Nom du fichier qui va s'exécuter pour l'accès aux informations.
- Nom du fichier de logs.
- Déclaration de la redondance s'il y en a, et dans l'affirmative quel type, quel est le processus redondant, etc.
- Définition des fonctions globales du sous-système en nominal et en dégradé ainsi que le nom de la routine du programme qui exécute les instructions, les noms de valeurs attendus lors de l'exécution et la fréquence attendue d'exécution en hertz (nombre de fois par seconde).
- Déclaration d'actions dans le cas de problèmes de communication, d'une part entre le processus et son dispositif (nombre de fois de relance, si on peut relancer l'interface ou pas, etc.) et entre le processus gardien et ce processus spécifique, ainsi que le temps qu'on peut attendre avant de lancer une alarme de non communication et combien d'alarmes on doit accumuler avant de déclencher la procédure de récupération du processus.
- Définition du type d'interface de communication avec le dispositif dédié.

### IV. Exemples des structures de fichiers

### IV.1 Fichier configuration général (dédié au Processus Gardien)

Le fichier est décomposé en différentes parties qui définissent les règles de comportement pour tous les cas considérés à l'avance.

```
 <Fonction_Description>
     <Attitude_Determination>
      <Prime><IMU></Prime>
      <Degr1><GPS></Degr1>
      <Degr2><HRS></Degr2>
      <Degr3><Altimeter></Degr3>
      <CRIT=LEVEL1/>
           <Memory_Segment='ATTDMS' />
     </Attitude_Determination>
     <Heading_Determination>
      <Prime><HRS></Prime>
      <Degr1><GPS></Degr1>
      <Degr2><IMU></Degr2>
           <Memory_Segment='HEADMS'/>
      <CRIT=LEVEL2/>
     </Heading_Determination>
     <Position_Determination>
      <Prime>< GPS ></Prime>
      <Degr1>< IMU ></Degr1>
           <Memory_Segment='POSDMS'/>
      <CRIT=LEVEL2/>
     </Position_Determination>
     <Altitude_Determination>
      <Prime><Altimeter></Prime>
      <Degr1><GPS></Degr1>
      <Degr2><IMU></Degr2>
           <Memory_Segment='ALTDMS' />
      <CRIT=LEVEL2/>
     </Altitude_Determination>
     <Air_Speed_Measurement>
      <Prime><Pitot></Prime>
           <Memory_Segment='ASPMMS'/>
      <CRIT=LEVEL3/>
     </Air_Speed_Measurement>
     <Ground_Speed>
      <Prime><Doppler_RADAR></Prime>
      <Degr1><GPS></Degr1>
      <Degr2><IMU></Degr2>
           <Memory_Segment='GRSPMS'/>
      <CRIT=LEVEL3/>
     </Ground_Speed>
     <Throttle_Management>
      <Prime><Tachometer></Prime>
      <Degr1><Energy Meter></Degr1>
           <Memory_Segment='TRMGMS'/>
      <CRIT=LEVEL2/>
     </Throttle_Management>
     <Energy_Management>
      <Prime><Energy_Meter></Prime>
      <CRIT=LEVEL3/>
     </Energy_Management>
     <Ground_Station_Communications>
      <Prime><Comm_Device></Prime>
      <Degr1><Ext_Lights></Degr1>
           <Memory_Segment='SCOMMS'/>
      <CRIT=LEVEL2/>
     </Ground_Station_Communications>
     <Control_Management>
      <Prime><Actuators></Prime>
           <Memory_Segment='CTRLMS' />
      <CRIT=LEVEL1/>
     </Control_Management>
 </Fonction_Description>
```

### IV.2 Description du fichier modules

```
 <Subsystem_Description>
      <IMU>
           <Prime><Attitude Determination='></Prime>
           <Degr><Position Determination></Degr>
           <Degr><Altitude_Determination></Degr>
      </IMU>
      <GPS>
           <Prime><Position_Determination></Prime>
           <Degr><Altitude Determination></Degr>
           <Degr><Ground_Speed><Degr/>
           <Degr><Heading_Determination></Degr>
           <Degr><Attitude_Determination></Degr>
      </GPS>
      <HRS>
           <Prime><Heading_Determination></Prime>
           <Degr><Attitude_Determination></Degr>
      </HRS>
      <Altimeter>
           <Prime><Altitude_Determination></Prime>
           <Degr><Attitude_Determination></Degr>
     </Altimeter>
      <Pitot>
           <Prime><Air_Speed_Measurement></Prime>
           <Degr><Altitude Determination></Degr>
      </Pitot>
      <Doppler_RADAR>
           <Prime><Ground_Speed></Prime/>
           <Degr><Altitude Determination></Degr>
      </Doppler_RADAR>
           <Comm_Device>
           <Prime><Ground_Station_Communications></Prime>
      </Comm_Device>
      <Tachometer>
           <Prime><Throttle_Management></Prime>
           <FILE ='/Tachometer.exe'/>
      </Tachometer>
      <Energy_Meter>
           <Prime><Energy_Management></Prime>
           <Degr><Throttle_Management></Degr>
      </Energy_Meter>
     <Actuators>
          <Prime><Control_Management></Prime>
           <Degr><Conservative_Control_Pitch></Degr>
           <Degr><Specific_Landing></Degr>
      </Actuators>
 </Subsystem_Description>
```

### IV.3 Fichier configuration dédié à chaque module périphérique :

```
 <IMU1>
      <FILE '/IMU.exe'/>
      <LogFile 'IMU.log/>
      <Startup_Init YES/>
      <Redondancy>
           <TypeRedondancy HOT/>
           <Redondand_Rol Prime/>
           <Redondant_Couple IMU2/>
      </Redondancy>
      <Function>
                <Attitude_Determination>
                     <Name 'AttDetermination'/>
                     <Values>
                          <pitch/>
                          <roll/>
                     </Values>
                     <Freq 100/>
                <Position_Determination>
                     <Name='PosIntegration' />
                     <Values>
                          <longitude/>
                          <latitude/>
                          <ground_speed/>
                     </Values>
                     <Freq 2/>
                </Position_Determination>
                <Altitude_Determination>
                  <Name='AltCalculation' />
                     <Values>
                          <altitude/>
                          <vertical_speed/>
                    </Values>
                    <Freq 2/>
                </Altitude Determination>
           </Function>
           <Communication_Error>
           <Device Error>
             <Retries 3/>
             <Init_Port YES/>
             <Init_Memory NO/>
           </Device Error>
           <Watchdog '50ms'/>
           <Process Error>
             <Retries_comm 3>
             <Delay_Retries 20ms/>
             <Init_Process YES/>
           </Process Error>
           </Communication_Error>
          <Interface_Device>
                <Type 'UART1'/>
                <Speed 9600/>
                <Characteristics 8N1/>
      </Interface_Device>
 </IMU1>
```

## Revendications

1. Système de commande embarqué d'un véhicule comprenant :
une unité de commande (12) comprenant un calculateur ;
une pluralité de modules périphériques (18ᵢ) réalisant chacun une fonction principale déterminée, chaque module périphérique comprenant au moins un capteur dédié fournissant les mesures permettant de remplir sa fonction principale ;
l'unité de commande (12) étant configurée pour recevoir des informations des modules périphériques (18ᵢ) et conduire une mission sur bases de ces informations ;
**caractérisé en ce que**
au moins un des modules périphériques (18₁) est configuré pour, au moyen de son au moins un capteur, réaliser sa fonction principale et, sur demande, réaliser une fonction secondaire prédéterminée correspondant à la fonction principale d'un autre module périphérique (18₂) du système ; et
l'unité de commande (12) est configurée pour mettre en oeuvre un processus gardien (PG) ayant pour fonction : de vérifier l'état de fonctionnement de chacun des modules périphériques et, en cas de défaillance d'un module périphérique, évaluer la possibilité de réaliser la mission dans un mode dégradé, en particulier en activant une fonction secondaire dans un module périphérique non-défectueux et non-redondant du module périphérique défectueux, pour être utilisée par l'unité de commande en substitution des données de fonction principale du module périphérique défectueux.

2. Système de commande embarqué selon la revendication 1, dans lequel, lorsqu'aucun module périphérique non-défectueux ayant une fonction secondaire apte à remplacer le module périphérique défectueux n'est trouvé, le processus gardien évalue la possibilité de continuer la mission avec la perte complète du module périphérique défectueux, et
en particulier, si la mission ne peut pas être poursuivie sans ledit module périphérique défectueux, le processus gardien déclenche une procédure d'arrêt d'urgence.

3. Système de commande embarqué selon la revendication 2, dans lequel, si la mission peut être poursuivie sans ledit module périphérique défectueux, dans un mode de commande dégradé, alors le processus gardien invite l'utilisateur à décider de la poursuite de la mission ou de sa fin.

4. Système de commande embarqué selon l'une quelconque des revendications précédentes, dans lequel dès qu'une incohérence d'un module périphérique est détectée, le processus gardien déclenche une routine de récupération de situation d'erreur, comprenant de préférence au moins l'une des actions suivantes : redémarrage du capteur ou du module périphérique, réinitialisation de la communication avec le module périphérique, demande aux autres modules périphériques leur état de communication.

5. Système de commande embarqué selon l'une quelconque des revendications précédentes, dans lequel un module périphérique est configuré pour réaliser au moins une autre fonction secondaire correspondant à la fonction principale d'un autre module périphérique du système dont il n'est pas redondant.

6. Système de commande embarqué selon l'une quelconque des revendications précédentes, dans lequel un processus applicatif (20ᵢ) correspondant à chaque module périphérique (18*i*) est exécuté dans une partition dédiée de la mémoire (16) du module de commande.

7. Système de commande embarqué selon l'une quelconque des revendications précédentes, dans lequel chaque module périphérique (18ᵢ) se présente sous forme de carte électronique.

8. Système de commande embarqué selon l'une quelconque des revendications précédentes, comprenant au moins une partie des modules périphériques suivants : IMU, GPS, HRS, altimètre, Pitot, Radar Doppler, et dans lequel chacun de ces modules périphériques est configuré pour opérer une fonction principale et au moins une fonction secondaire.

9. Système de commande embarqué selon l'une quelconque des revendications précédentes, dans lequel :
le module IMU est configuré pour fournir, au titre de sa fonction principale, des données d'attitude, et au titre de sa fonction secondaire des données de position et/ou d'altitude ; et/ou
le module GPS est configuré pour fournir, au titre de sa fonction principale, des données de position, et au titre de sa fonction secondaire des données d'altitude, de vitesse sol, de route et/ou d'attitude ; et/ou
le module HRS est configuré pour fournir, au titre de sa fonction principale, des données de route, et au titre de sa fonction secondaire des données d'attitude ; et/ou
le module Altimètre est configuré pour fournir, au titre de sa fonction principale, des données d'altitude, et au titre de sa fonction secondaire des données de vitesse verticale et/ou de tangage ; et/ou
le module Pitot est configuré pour fournir, au titre de sa fonction principale, des données de vitesse d'air, et au titre de sa fonction secondaire des données d'altitude ; et/ou
le module Radar Doppler est configuré pour fournir, au titre de sa fonction principale, des données de vitesse sol, et au titre de sa fonction secondaire des données d'altitude et/ou de vitesse verticale.

10. Système de commande embarqué selon l'une quelconque des revendications précédentes, dans lequel un fichier de configuration principal est associé au processus gardien, lequel fichier définit la liste des fonctions requises pour la mission, et définit pour au moins partie de ces fonctions : le module périphérique fournissant l'information requise pour la fonction en mode nominal ; le ou les modules périphériques aptes à fournir des informations de remplacement en mode dégradé ; et de préférence le niveau de criticité et/ou le segment mémoire attribué au processus applicatif.

11. Système de commande embarqué selon l'une quelconque des revendications précédentes, comprenant un fichier module qui définit les différents modules périphériques et pour chacun d'eux : la fonction principale et la ou les fonctions de substitution en mode dégradé.

12. Système de commande embarqué selon l'une quelconque des revendications précédentes, dans lequel le processus applicatif associé à un module périphérique exploite un fichier qui définit : des fonctions globales dudit module périphérique en mode nominal et en dégradé, des actions dans le cas de problèmes de communication, entre le processus et le module, et entre le processus gardien et le processus applicatif.

13. Système de commande embarqué selon l'une quelconque des revendications précédentes, dans lequel l'unité de commande met en oeuvre un processus de contrôle de vol.

14. Système d'avionique, en particulier pour drone ou avion, comprenant un système de commande selon l'une quelconque des revendications précédentes.

15. Système de commande embarqué d'un véhicule automobile comprenant un système de commande selon l'une quelconque des revendications 1 à 12.

16. Procédé de fonctionnement d'un système de commande embarqué pour un véhicule, ledit système de commande comprenant un module de commande recevant, pour l'accomplissement d'une mission, des informations d'une pluralité de modules périphériques réalisant chacun une fonction principale déterminée, chaque module périphérique ayant au moins un capteur dédié fournissant les mesures permettant de remplir sa fonction principale, ledit procédé étant **caractérisé en ce qu'**il met en oeuvre un processus gardien ayant pour fonction : de vérifier l'état de fonctionnement de chacun des modules périphériques et, en cas de défaillance d'un module périphérique, évaluer la possibilité de réaliser la mission dans un mode dégradé, en particulier en activant une fonction secondaire dans un module périphérique non-défectueux et non-redondant du module périphérique défectueux, pour être utilisée par le module de commande en substitution des données de fonction principale du module périphérique défectueux.
